# EUROPEAN PATENT APPLICATION

(11) **EP 4 470 850 A1**
(43) Date of publication of application: **04.12.2024**
(21) Application number: 23176574.4
(22) Date of filing: 31.05.2023
(51) Int. Cl.: B60S 1/04, F16B 5/12, B60S 1/58

(54) **FIXING DEVICE FOR A WINDSCREEN WIPER MOUNTING ASSEMBLY**

(71) Applicant: Valeo Systèmes d'Essuyage, 78322 Le Mesnil Saint Denis (FR)
(72) Inventor: ZAJAC, Piotr-Michal, 78322 LE MESNIL SAINT DENIS (FR); TOPOLSKY, Daniel, 78322 LE MESNIL SAINT DENIS (FR)
(74) Representative: Valeo Visibility

(57) **Abstract**

The present invention relates to a fixing device (130, 140, 150) of a mounting part (105) configured to be attached to a support frame (110), which comprises: a grommet member (107a) having a receiving area (120) configured to receive a mounting head (108) of the mounting part (105); and a connecting piece (130a, 140a, 150a) configured to secure the mounting part (105) to the support frame (110), the connecting piece comprising: a holding portion (130b, 140b, 150b) extending at least partially along an outer surface of the grommet member (107a), the holding portion (130b, 140b, 150b) being configured to receive and rigidly hold the grommet member (107) in position on the mounting head (108) of the mounting part (105), and a fixing portion (134, 144, 154) configured to cooperate with a secure element of the support frame (110) to engage the mounting part (105) to the support frame (110).

## Description

### TECHNICAL FIELD

The present invention relates to components for a wiper mounting assembly for a motor vehicle, and more particularly to a fixing device of a windscreen wiper mounting assembly to a motor vehicle, and a corresponding windscreen wiper mounting assembly.

### STATE OF THE ART

Windscreen wiper assembly is typically used in motor vehicles and the like, during rainy condition and also for cleaning the windscreen of any dirt or water particles to enable the motor vehicle operator to see properly through the front and rear windscreens of the motor vehicle.

The windscreen wiper assembly comprises one or more wiper blades and a wiper arm assembly supporting the wiper blades. Further, the windscreen wiper assembly comprises a motor configured to drive the wiper arm assembly to perform the wiping operation. The motor is mounted on a mounting part, which is generally fixed to a vehicle body using one or more mechanical components. For example, the mounting part is typically screwed or bolted to the a vehicle metal sheet, which is quite complex and time consuming due to the use of many parts such as screws and the need of installation tools.

Furthermore, the windscreen wiper assembly comprises generally several separate parts before the final installation to the vehicle body. The transportation of these separate parts requires often several costly separate packaging.

There is thus a need to provide a low-complexity and cost saving technical solution that makes it possible to ensure not only a robust and compact windscreen wiper mounting assembly before the final installation but also a rapid and tool-free installation of the mounting part to the vehicle body.

### SUMMARY OF THE INVENTION

An object of the invention is to alleviate the problems raised by the prior arts. To be more precise, an object of the invention is to provide a fixation mechanism that enables to attach a mounting part of a wiper motor to a vehicle body without employing mechanical components such as screws and without using any tools for installation.

Another object of the present invention is to provide a fixation mechanism that reduces operations on assembly line during the assembly of the mounting part to the vehicle body.

To achieve these objectives, the present invention provides a fixing device of a mounting part configured to be attached to a support frame, in particular for a windscreen wiper mounting assembly, the fixing device comprising: a grommet member having a receiving area configured to receive a mounting head of the mounting part; and a connecting piece configured to secure the mounting part to the support frame, the connecting piece comprising : a holding portion extending at least partially along an outer surface of the grommet member, the holding portion being configured to receive and rigidly hold the grommet member in position on the mounting head of the mounting part, and a fixing portion configured to cooperate with a secure element of the support frame to engage the mounting part and the support frame. Advantageously, with the proposed invention, the mounting part can be assembled to the support frame without employing screws or any other mechanical fixing components. When the fixing device is used in the windscreen wiper mounting assembly, the windscreen wiper mounting assembly can thus be easily secured to the vehicle body of a motor vehicle without using any tool.

Further, the fixing device facilitates to use minimum number of parts for engaging the mounting part and the support frame of the motor vehicle. For instance, a spacer that is generally employed in conventional fixing mechanism is avoided in the proposed invention. Thereby, the mounting part and the vehicle body can be assembled easily. Thus, the use of the fixing device allow advantageously a reliable connection between the mounting part and the support frame.

According to one characteristic of the present invention, the grommet member comprises a substantially an inverse C shape comprising an upper wing, a lower wing joined together with a joining part, delimiting an opened through hole of the receiving area. This shape of the grommet member enables to rigidly hold the grommet member in position on the mounting head of the mounting part and ease the attachment of the mounting part with the vehicle body. Further, the grommet member can rotate on a mounting axis defined by the mounting head, which enables the connecting piece to rotate and thereby the fixing portion of the connecting piece can be easily inserted from different directions. For instance, the connecting piece and the grommet member can rotate on the mounting axis in both clockwise and anticlockwise directions. Advantageously, the grommet member is configured to deform during the assembly, which allows insertion of the fixing portion into the support frame by providing necessary pressure. Further, the grommet member allows advantageously avoiding any eventual disengagement of the mounting part and the support frame.

According to one characteristic of the present invention, the holding portion comprises substantially a U shape with a base portion, a first leg portion and a second leg portion, the first and second leg portions extending substantially perpendicular to the base portion, the second leg portion having a smaller dimension than the first leg portion. Advantageously, the holding portion is capable of holding the grommet member rigidly in position on the mounting head of the mounting part. Further, the grommet member is dimensioned in such a way that the holding portion rigidly holds the grommet member in position on the mounting head.

According to one characteristic of the present invention, the first leg portion of the holding portion extends along an outer surface the joining part of the grommet or free ends of the upper wing and the lower wing; and the second leg portion and the base portion of the holding portion extends along the lower wing of the grommet or extends along the lower wing and a portion of the joining part.

According to one characteristic of the present invention, the fixing portion extends from the first leg portion to secure the mounting part to the support frame, and wherein the fixing portion and the holding portion are integrally formed as a single piece. The fixing portion is adapted to be fitted in a through orifice formed in the support frame and advantageously the fixing portion engages the mounting part with the support frame. In addition, the fixing portion advantageously limit free rotation of the connecting piece when the mounting part is attached to the support frame.

According to one characteristic of the present invention, the fixing portion extends parallel to the base portion and is configured to be received into a first through orifice of the support frame to secure to the secure element for fixing the mounting part to the support frame, the secure element being a portion of a base of the support frame. In an aspect, a free end of the fixing portion is provided with a locking element, for instance, a hook. During the assembly, the fixing portion is inserted into the first through orifice from inside of the vehicle by rotating the connecting piece. Once the fixing portion passes through the first through orifice, the upper wing of the grommet member abuts against the bottom portion and the fixing portion extends along a portion of an upper side of a base of the support frame to introduce the locking element into a second through orifice of the support frame, which is in proximity to the first through orifice. The locking element is inserted into the second through orifice in such a way that the locking element abuts against a lower side of the support frame to attach the mounting part and the support frame.

According to one characteristic of the present invention, the fixing portion extends parallel to the base portion is configured to be introduced into a third through orifice of the support frame to secure to the secure element for fixing the mounting part to the support frame, the secure element being a flange extending perpendicular to the base of the support frame. For instance, a portion of the support frame can be cut and folded to obtain the flange, thus the flange is part of the support frame. The flange is arranged to be in parallel with the shaft of the wiper motor. During the assembly, the fixing portion is adapted to be inserted into the third through orifice from inside of the vehicle by rotating the connecting piece such that fixing portion extends along the flange and the free end of the fixing portion cooperates with a free end of the flange and thereby engaging the mounting part to the support frame.

According to one characteristic of the present invention, the fixing portion comprises a locking hook, which is being configured to abut against a free end of the flange so as to be secured to the flange. Advantageously, the locking hook prevents the disengagement of the mounting part from the support frame, thereby providing a reliable connection between the mounting part and the support frame.

According to one characteristic of the present invention, the fixing portion comprises a locking protrusion, which is being configured to cooperate with the flange so as to be secured to the flange. In an aspect, the locking protrusion has a flat profile, which is configured to engage the fixing portion with the flange.

According to one characteristic of the present invention, the grommet member is made of a first expandable material and the connecting piece is made of a second expandable material, wherein the second expandable material being less expandable than the first expandable material. According to an embodiment, the first expandable material is rubber and the second expandable material is plastic.

According to one characteristic of the present invention, the mounting part is a wiper motor cover and the support frame is a metal sheet of a vehicle body.

According to one characteristic of the present invention, a windscreen wiper mounting assembly for a motor vehicle is proposed and it comprises: a mounting part; a support frame comprising a base, at least one flange extending perpendicular to the base, and at least one through orifice; a wiper motor; and the mounting part comprise a base plate configured to receive and maintain the wiper motor and at least two locking arms extending from the base plate, wherein each locking arm comprises a mounting head, each of the mounting head being configured to be introduced into a receiving area of the grommet member of a fixing device as defined above to secure the mounting part to the support frame.

According to one characteristic of the present invention, the windscreen wiper mounting assembly can be a windscreen wiper mounting assembly for a rear windscreen of a motor vehicle.

According to one characteristic of the present invention, a motor vehicle comprising a windscreen wiper mounting assembly as defined above is proposed.

According to one characteristic of the present invention, a method for assembling a mounting part of a wiper motor to a support frame, in particular for a windscreen wiper mounting assembly is proposed. The method comprising the steps of: providing the mounting part provided with a fixing device as defined above; providing a support frame, wherein the support frame comprises a base, at least one flange extending perpendicular to the base, and at least one through orifice; moving the mounting part closer to the support frame for assembly of the mounting part with the support frame; introducing a fixing portion of a connecting piece of the fixing device into a through orifice from a lower side of the support frame by rotating a connecting piece so that a upper wing of the grommet member abuts against the lower side ; and engaging the mounting part and the support frame by securing the fixing portion to a securing member of the support frame.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a perspective view of an example of motor vehicle comprising at least a windscreen wiper mounting assembly, according to an embodiment of the present invention.
[Fig.2a] shows a perspective view of a mounting part of a rear windscreen wiper assembly, according to an embodiment of the present invention.
[Fig.2b] shows a perspective view of the mounting part of Fig.2a assembled to a support frame of a motor vehicle, according to an embodiment of the present invention.
[Fig.3a] shows a perspective view of a support frame, according to an embodiment of the present invention.
[Fig.3b] shows a perspective view of a grommet member of the fixing device, according to an embodiment of the present invention.
[Fig.4a] shows a connecting piece of a fixing device of the mounting part, according to an embodiment of the present invention.
[Fig.4b] shows a fixing device having the connecting piece of the Fig.4a, according to an embodiment of the present invention.
[Fig.4c] shows the mounting part assembled to the support frame by employing a fixing device of the Fig.4b, according to an embodiment of the present invention.
[Fig.4d] shows an exploded view of a portion of the Fig.4c.
[Fig 5a shows a connecting piece of a fixing device of the mounting part, according to another embodiment of the present invention.
[Fig.5b] shows a fixing device having the connecting piece of the Fig.5a, according to another embodiment of the present invention.
[Fig.5c] shows the mounting part assembled to the support frame by employing a fixing device of the Fig.5b, according to another embodiment of the present invention.
[Fig.5d] shows an exploded view of a portion of the Fig.5c.
[Fig.6a] shows a connecting piece of a fixing device of the mounting part, according to further embodiment of the present invention.
[Fig.6b] shows a fixing device having the connecting piece of the Fig.6a, according to further embodiment of the present invention.
[Fig.6c] shows the mounting part assembled to the support frame by employing a fixing device of the Fig.6b, according to further embodiment of the present invention.
[Fig.6d] shows an exploded view of a portion of the Fig.6c.

### DETAILED DESCRIPTION OF THE INVENTION

Hereinafter, embodiments of the present invention will be described with reference to the accompanying drawings.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

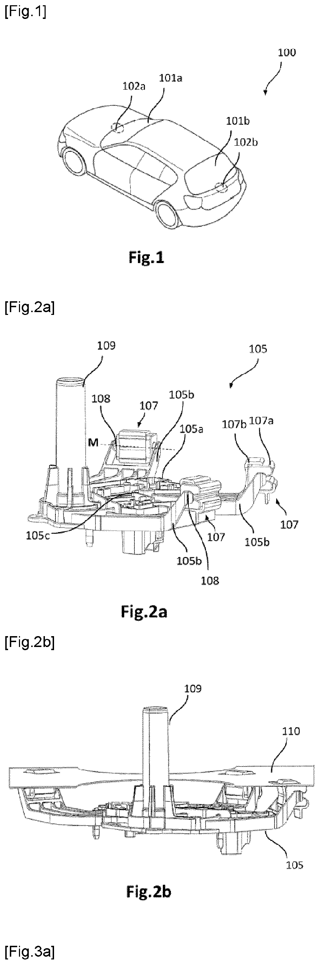

Fig.1 shows a perspective view of a motor vehicle 100 comprising at least one optical surface, here for example a front windscreen 101a and a rear windscreen 101b and at least one windscreen wiper mounting assembly, here for example a front windscreen wiper mounting assembly 102a and a rear windscreen wiper mounting assembly 102b.

These two wiper mounting assemblies102a and 102b are configured to be fixed to the vehicle body of the motor vehicle 100, respectively close to the front windscreen 101a and the rear windscreen 101b in order to clean respectively the front windscreen 101a and the rear windscreen 101b.

Fig 2a shows a perspective view of a mounting part of a rear windscreen wiper assembly, according to an embodiment of the present invention. As can be seen from the Fig.2a, the mounting part 105 comprises a base plate 105a; at least one locking arm 105b extending from the base plate 105a, here for example three upper locking arms 105b and a central area 105c disposed in the middle of the upper locking arms 105b. Further, the mounting part 105 comprises at least one fixing device 107, here for example three fixing devices, each fixing device 107 being configured to be disposed on a mounting head 108 of corresponding locking arm 105b. The fixing device 107 comprises a grommet member 107a and a connecting piece 107b. Further, the mounting part 100 comprises a rear wiper motor (not shown in the Figures) disposed over the central area 105c, and a shaft 109 of the motor is shown in the Fig.2a and the Fig.2b. In an aspect, the mounting part 105 is a wiper motor cover.

Fig 2b shows a perspective view of the mounting part of Fig.2a assembled to a support frame of a motor vehicle, according to an embodiment of the present invention. An exemplary support frame 110 is depicted in Fig.3a. In an aspect, the support frame 110 is a metal sheet of a vehicle body. The support frame 110 comprises a base 110a, at least one through orifice 111 a, 111b, and 111c, and at least one flange 112 extending perpendicular to the base. It is understood to a person skilled in the art, the shape and dimensions of the at least one through orifice may vary depending on the requirements.

In an aspect, the support frame 110 comprises a first through orifice 111a and a second through orifice 111b formed in proximity to the first through orifice 111a. For instance, dimensions of the first through orifice 111a and the second through orifice 111b may be different. By way of an example and not the limitation, the first through orifice 111a has larger dimensions than the dimensions of the second through orifice 111b, as can be seen from the Fig.3a.

In another aspect, the support frame 110 may comprise a flange 112 extending perpendicular to the base 110a of the support frame 110. The flange 112 is part of the support frame 110. For instance, a portion of the support frame 110 can be cut and folded to obtain the flange 112, and the orifice that is adjacent to the flange 112 is referred a third through orifice 111c. When, the mounting part 105 is engaged with the support frame 110, the flange 112 would be parallel to the shaft 109 of the wiper motor. It is understood that the support frame 110 can be formed with multiple flanges 112 and/or multiple orifices based on the requirements. In one example, the support frame 111 is formed with plurality of first and second orifices 111a, 111b. In another example, the support frame 110 is with plurality of flanges 112 and third orifice 111c. Yet, in another example, the support frame 110 is formed with the first orifice 111a, the second orifice 111b, one or more flanges 112, and the third orifice 111c.

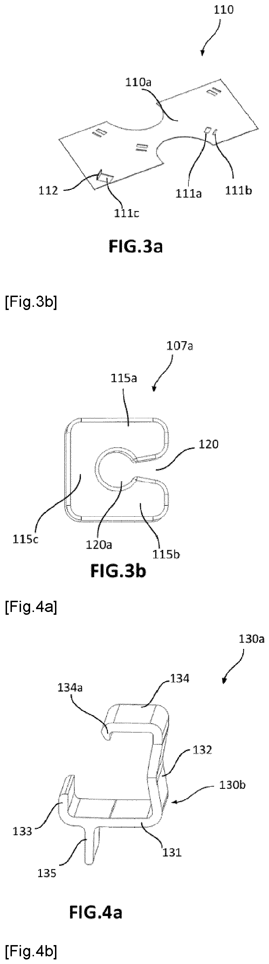

Fig 3b shows a perspective view of a grommet member of the fixing device, according to an embodiment of the present invention. As can be seen from the Fig.3b, the grommet member 107a comprises a substantially an inverse C shape comprising an upper wing 115a, a lower wing 115b joined a joining part 115c. A receiving area 120 is formed between the upper wing 115a, the lower wing 115b and the joining part 115c. The receiving area 120 includes an opened through hole 120a. The receiving area 120 of the grommet member 107a is configured to be received on the mounting head 108 of the mounting part 105. Advantageously, the grommet member 107a is configured to deform during the assembly, which allows assembly of the mounting part 105 to the support frame 110 by providing necessary pressure. In an aspect, the grommet member 107a is made of a rubber such that the grommet member 107a is flexible and expandable.

As previously mentioned, the mounting part 105 comprises the fixing device 107, which includes the connecting piece 107b. For instance, the connecting piece 107b is a clip, and is made of plastic. The connecting piece 107b is configured to secure the mounting part 105 to the support frame 110. In one aspect, the grommet member 107a is configured to be mounted on the mounting head 108 and the connecting piece 107b is assembled to the grommet member107a. In another aspect, the grommet member 107a and the connecting piece 107b are assembled together and the assembled part is mounted on the mounting head 108. Further, the grommet member 107a is adapted to be rotated on a mounting axis M of the mounting head 108, which enables the connecting piece 107b to rotate and thereby allowing the mounting part 105 to be engaged to the support frame 110. For instance, both the connecting piece 107b and the grommet member 107a would rotate on the mounting axis M in both clockwise and anticlockwise directions.

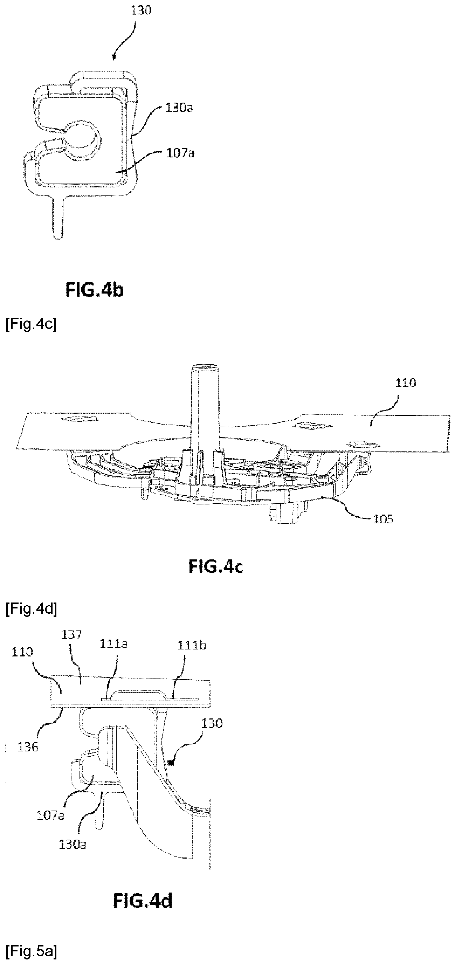

Fig 4a shows a connecting piece of a fixing device of the mounting part, according to an embodiment of the present invention. Fig.4b shows a fixing device having the connecting piece of the Fig.4a. Fig.4c shows the mounting part assembled to the support frame by employing a fixing device of Fig.4b having the connecting piece of the Fig.4a, according to an embodiment of the present invention. Fig.4d shows an exploded view of a portion of the Fig.4c.

By way of an example and not the limitation, the connecting piece 107a shown in the Fig.2a can be any one of the connecting pieces illustrated in Fig.4a, Fig.5a, and Fig.5a. Further, the fixing device 107 shown in the Fig.2a can be any one of the fixing devices shown in Fig.4b, Fig5b and Fig.6b.

The fixing device 130 (shown in Fig.4b) according to this embodiment comprises a grommet member 107a (shown in Fig.3b) and a connecting piece 130a, which is shown in the Fig.4a. The connecting piece 130a comprises a holding portion 130b, which comprises substantially a U shape with a base portion 131, a first leg portion 132 and a second leg portion 133, the first and second leg portions 132 and 133 extending substantially perpendicular to the base portion 131, the second leg portion 133 having a smaller dimension than the first leg portion 133, as can be seen from the Fig.4a. Optionally, the holding portion 130b may also comprise a holding flange 135 configured to hold the fixing device for easy assembly of the fixing device 130 to the support frame 110.

The holding portion 130b is configured to rigidly hold the grommet member 107a in position on the mounting head 108a of the mounting part 105. Further, the grommet member 107a is dimensioned in such a way that the holding portion 130b can rigidly hold the grommet member 107b in position on the mounting head 108. As can be seen from the Fig.4b, the holding portion 130b extends at least partially along an outer surface of the grommet member 107a. In one aspect, the grommet member is assembled to the connecting piece such that the first leg portion 132 of the holding portion extends along an outer surface the joining part 115c of the grommet member 107a and the second leg portion 133 and the base portion 131 of the holding portion 130b extends along the lower wing 115b of the grommet member 107a as can be seen from the Fig.4c. In another aspect, it is also possible that the first leg portion 132 of the holding portion 130b extends along free ends of the upper wing 115a and the lower wing 115b and the second leg portion 133 and the base portion 131 of the holding portion 130b extends along the lower wing 115b and a portion of the joining part 115c.

In this embodiment, the connecting piece130a also comprises a fixing portion 134 configured to cooperate with a secure element of the support frame 110 to attach the mounting part 105 to the support frame 110. As can be seen from the Fig.4a, the fixing portion 134 extends from the first leg portion 132 and is configured to secure the mounting part 105 to the support frame 110. It is to be noted that the holding portion 130b and the fixing portion 134 are integrally formed as a single piece.

The fixing portion 134 is configured to be received into the at least one through orifice 111a, 111b of the support frame 110 to secure the fixing portion 134 to a secure element of the support frame 110 to engage the mounting part 105 and the support frame 110. For instance, the secure element of the support frame 110 is at least a portion of the base 110a of the support frame 110.

In an aspect, a free end of the fixing portion 134 is provided with a locking element 134a, for instance, a hook.

During the assembly, the fixing portion 134 is inserted into the first through orifice 111a from inside of the vehicle by rotating the connecting piece 130a assembled with the grommet member 107a. Once the fixing portion134 passes through the first through orifice 111a, the upper wing 115a of the grommet member 107a abuts against a lower side 136of the support frame and the fixing portion 134 extends along a portion of an upper side 137 of a base 110a of the support frame 110 to introduce the locking element into a second through orifice 111b of the support frame 110, which is in proximity to the first through orifice 111a. The locking element 134a is inserted into the second through orifice 111b in such a way that the locking element 134 abuts against the lower side 136 of the support frame 110 to engage the mounting part 105 and the support frame 110. Further, when the support frame 110 is engaged with the mounting part 105, the grommet member 107 is pressed to the lower side 136 of the support frame 110 as can be seen from the Fig.4c. In this embodiment, the direction of the assembly of the fixing device 130 is parallel to the shaft 109 of the wiper motor. Further, in this embodiment, during the assembly, the grommet member 107a is configured to be compressed and the direction of the compression of the grommet member 107a is in a direction parallel to the shaft 109 of the wiper motor.

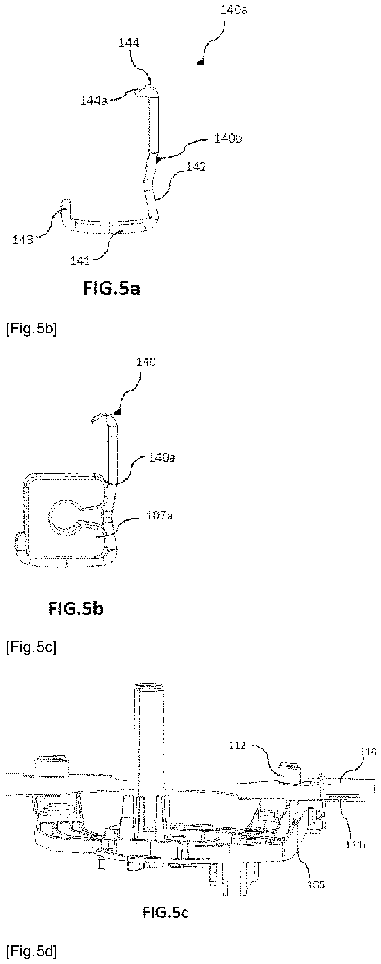

Fig 5a shows a connecting piece of a fixing device of the mounting part, according to another embodiment of the present invention. Fig.5b shows a fixing device having the connecting piece of the Fig.5a. Fig.5c shows the mounting part assembled to the support frame by employing a fixing device of Fig.5b having the connecting piece of the Fig.5a, according to another embodiment of the present invention. Fig.5d shows an exploded view of a portion of the Fig.5c.

According to this embodiment, the connecting piece 140a includes a holding portion 140b and a fixing portion 144. The connecting piece 140a according to this embodiment is different from the connecting piece 130a discussed in the previous embodiment. Likewise, the fixing device 140 according to this embodiment is different from the fixing device 130 discussed in the previous embodiment. Whereas the grommet member 107a employed in the fixing devices 130, 140 are same.

The fixing device 140 according to this embodiment comprises a grommet member 107a (shown in Fig.3b) and a connecting piece 140a, which is shown in the Fig.5a. The connecting piece 140a comprises the holding portion 140b, which comprises substantially a U shape with a base portion 141, a first leg portion 142 and a second leg portion 143, the first and second leg portions 142 and 143 extending substantially perpendicular to the base portion 141, the second leg portion 143 having a smaller dimension than the first leg portion 142, as can be seen from the Fig.5a. It is to be noted that the length of the first leg portion 142 of this embodiment is larger than the length of the first leg portion 132 of the previous embodiment.

Similar to the previous embodiment, the holding portion 140b is configured to rigidly hold the grommet member 107a in position on the mounting head 108 of the mounting part 105. Further, the grommet member 107a is dimensioned in such a way that the holding portion 140b can rigidly hold the grommet member 107b in position on the mounting head 108. As can be seen from the Fig.5b, the holding portion 140b extends at least partially along an outer surface of the grommet member 107a. In one aspect, the grommet member is assembled to the connecting piece such that the the first leg portion 142 of the holding portion 140b extends along free ends of the upper wing 115a and the lower wing 115b, and the second leg portion 143 and the base portion 141 of the holding portion 140b extends along the lower wing 115b and a portion of the joining part 115c.

In this embodiment, the connecting piece140a also comprises a fixing portion 144 configured to cooperate with a secure element of the support frame 110 to engage the mounting part 105 to the support frame 110. As can be seen from the Fig.5a, the fixing portion 144 extends from the first leg portion 142 and configured to secure the mounting part 105 to the support frame 110. It is to be noted that the holding portion 140b and the fixing portion 144 are integrally formed as a single piece.

According to this embodiment, the fixing portion 144 extends parallel to the base portion 141 and is configured to be introduced into the third through orifice 111c of the support frame 110 to secure to the secure element for fixing the mounting part 105 to the support frame 110. The secure element is the flange 112 extending perpendicular to the base 110a of the support frame 110. During the assembly, the fixing portion 144 is adapted to be inserted into the third through orifice 111c from inside of the vehicle by rotating the fixing device 140 such that a portion of the first leg portion extends along the flange 112 the free end of the fixing portion 144 cooperates with a free end of the flange 112 and thereby engaging the mounting part 105 to the support frame 110.

According to this embodiment, the fixing portion 144 comprises a locking protrusion 144a, which is being configured to cooperate with the flange 112 so as to be secured to the flange 112. In an aspect, the locking protrusion 144a has a flat profile, which is configured to engage the fixing portion 144 with the flange 112. Further, when the support frame 110 is engaged with the mounting part 105, the grommet member 107a is pressed to the lower side of the support frame 110 as can be seen from the Fig.5d. In this embodiment, direction of the assembly of the fixing device 140 is parallel to the shaft of the wiper motor. Further, in this embodiment, during the assembly, the grommet member 107a is configured to be compressed and the direction of the compression of the grommet member 107a is in a direction parallel to the shaft 109 of the wiper motor.

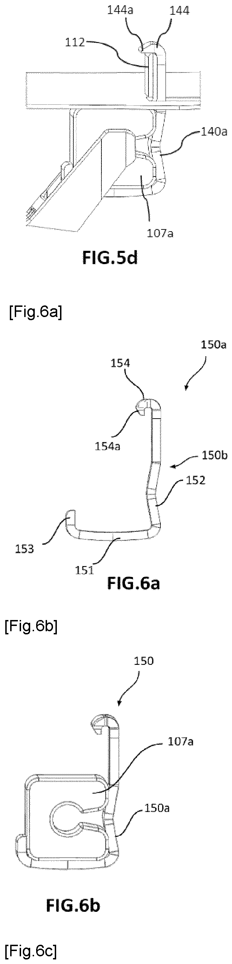

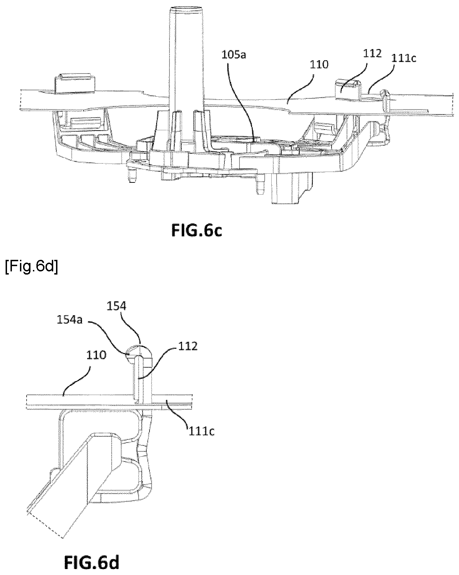

Fig.6a shows a connecting piece of a fixing device of the mounting part, according to further embodiment of the present invention. Fig.6b shows a fixing device having the connecting piece of the Fig.6a. Fig.6c shows the mounting part assembled to the support frame by employing a fixing device of Fig.6b having the connecting piece of the Fig.6a, according to further embodiment of the present invention. Fig.6d shows an exploded view of a portion of the Fig.6c.

This embodiment differs from the previous embodiment shown in Fig.5a to Fig.5d in the fixing portion of the fixing device.

According to this embodiment, the connecting piece 150a includes a holding portion 150b and a fixing portion 154. The connecting piece 150a according to this embodiment is different from the connecting pieces 130a, 140a discussed in the previous embodiments. Likewise, the fixing device 150 according to this embodiment is different from the fixing devices 130, 140 discussed in the previous embodiments. Whereas the grommet member 107a employed in the fixing devices 130, 140, 150 are same.

The fixing device 150 according to this embodiment comprises a grommet member 107a (shown in Fig.3b) and a connecting piece 150a, which is shown in the Fig.6a. The connecting piece 150a comprises a holding portion 150b, which comprises substantially a U shape with a base portion 151, a first leg portion 152 and a second leg portion 153, the first and second leg portions 152 and 153 extending substantially perpendicular to the base portion 151, the second leg portion 153 having a smaller dimension than the first leg portion 152, as can be seen from the Fig.6a.

Similar to the previous embodiment, the holding portion 150b is configured to rigidly hold the grommet member 107a in position on the mounting head 108 of the mounting part 105. As can be seen from the Fig.6b, the holding portion 150b extends at least partially along an outer surface of the grommet member 107a. In one aspect, the grommet member is assembled to the connecting piece such that the first leg portion 152 of the holding portion 150b extends along free ends of the upper wing 115a and the lower wing 115b, and the second leg portion 153 and the base portion 151 of the holding portion 150b extends along the lower wing 115b and a portion of the joining part 115c.

In this embodiment, the connecting piece150a also comprises a fixing portion 154

According to this embodiment, the fixing portion 154 extends parallel to the base portion 151 and is configured to be introduced into the third through orifice 111c of the support frame 110 to secure to the secure element for fixing the mounting part 105 to the support frame 110. The secure element is the flange 112 extending perpendicular to the base 110a of the support frame 110. During the assembly, the fixing portion 154 is adapted to be inserted into the third through orifice 111c from inside of the vehicle by rotating the fixing device 150 such that a portion of the first leg portion 152 extend along the flange 112 and the free end of the fixing portion 154 cooperates with a free end of the flange 112 and thereby engaging the mounting part to the support frame.

In this embodiment, the fixing portion 150 comprises a locking hook 154a, which is being configured to abut against a free end of the flange 112 so as to be secured to the flange 112. Advantageously, the locking hook 154a prevents the disengagement of the mounting part 105 from the support frame 110. Further, when the support frame 110 is engaged with the mounting part 105, the grommet member 107a is pressed to the lower side of the support frame 110 as can be seen from the Fig.6d. In this embodiment, direction of the assembly of the fixing device 150 is parallel to the shaft of the wiper motor. Further, in this embodiment, during the assembly, the grommet member 107a is configured to be compressed and the direction of the compression of the grommet member 107a is in a direction parallel to the shaft of the wiper motor.

According to another embodiment of the present invention, direction of the assembly of a fixing device, in particular, the direction of the assembly of a fixing portion is substantially perpendicular to the shaft of the wiper motor. In this embodiment, the fixing portion is configured to be received in a fourth through orifice of the support frame 110 and secured to the secure element, for example, a flange of the support frame 110 to engage the mounting part 105 and the support frame 110. In this implementation, during the assembly, the grommet member 107a is configured to be compressed and the direction of the compression of the grommet member 107a is in a direction perpendicular to the shaft 109 of the wiper motor.

According to another embodiment of the present invention, a windscreen wiper mounting assembly for a motor vehicle is proposed. The windscreen wiper mounting assembly comprises a mounting part 105; a support frame 110 comprising a base 110a, at least one flange 112 extending perpendicular to the base 110a, and at least one through orifice 111a, 111b, 111c; and a wiper motor. The mounting part 105 comprise a base plate 105a configured to receive and maintain the wiper motor and at least two locking arms 105b extending from the base plate 105a. It is to be noted that number of locking arms may depend on the type of the motor vehicle. Each locking arm 105b comprises a mounting head 108; each of the mounting head 108 is being configured to be introduced into a receiving area 120 of the grommet member 107a of one of the fixing devices 130, 140, 150 as defined above to secure the mounting part 105 to the support frame 110.

According to another embodiment of the present invention, a motor vehicle comprising a windscreen wiper mounting assembly as defined above is proposed.

According to another embodiment of the present invention, a method for assembling a mounting part of a wiper motor to a vehicle body is proposed. The method comprising the steps of: providing the mounting part 105 provided with a fixing device 130, 140, 150 and providing a support frame 110. The support frame 110 comprises a base 110a, at least one flange 112 extending perpendicular to the base 110a, and at least one through orifice 111a, 111b, 111c. The method further comprises moving the mounting part 105 closer to the support frame 110 for assembly of the mounting part 105 with the support frame 110. Upon moving the mounting part 105 closer to the support frame 110, the method comprises introducing a fixing portion 134, 144, 154 of a connecting piece 130a, 140a, 150a of the fixing device 130, 140, 150 into a through orifice from a lower side 136 of the support frame 110 by rotating the connecting piece 130a, 140a, 150a so that a upper wing 115a of the grommet member 107a abuts against the lower side 137 of the support frame 110. Further, the method comprises engaging the mounting part 105 and the support frame 110 by securing the fixing portion 134, 144, 154 to a securing member of the support frame 110.

Advantageously, with the proposed invention, the mounting part 105 can be assembled to the support frame 110, i.e., vehicle metal sheet without employing screws or any other mechanical components. When the fixing device 130, 140, 150 is used in the windscreen wiper mounting assembly, the windscreen wiper mounting assembly can thus be easily secured to the vehicle metal sheet without using any tool. Further, the claimed invention facilitates to use minimum number of parts for assembling the mounting part 105 and the vehicle body. For instance, a spacer that is generally employed in conventional fixing mechanism is avoided in the present configuration. Thereby, the mounting part 105 and the vehicle metal sheet can be assembled easily. Thus, the use of the fixing device 130, 140, 150 allow advantageously a reliable connection between the mounting part 105 and the support frame 110.

The invention being thus described, it will be obvious that the same may be varied in many ways. Such variations are not to be regarded as a departure from the spirit and scope of the invention, and all such modifications as would be obvious to one skilled in the art are intended to be included in the scope of the following claims.

### LIST OF REFERENCE SIGNS

100 Motor vehicle
101a Front windscreen
101b Rear windscreen
102a Front windscreen wiper mounting assembly
102b Rear windscreen wiper mounting assembly
105 Mounting part
105a Base plate of the mounting part
105b Locking arms of the mounting part
107a Grommet member
108 Mounting head of the mounting part
109 Motor shaft
110 Support frame
110a Base of the support frame
111a First through flange
111b Second through flange
111cThird through flange
112 Flange
115a Upper wing of the grommet member
115b Lower wing of the grommet member
115c Joining part of the grommet member
120 Receiving area of the grommet member
120a Through orifice of the receiving area
130 Fixing device
130a Connecting piece
131 Base portion
132 First leg portion
133 Second leg portion
134 Fixing portion
134a Locking element
136 Lower side of the support frame
137 Upper side of the support frame
140 Fixing device
140a Connecting piece
141 Base portion
142 First leg portion
143 Second leg portion
144 Fixing portion
144a Locking element
150 Fixing device
150a Connecting piece
151 Base portion
152 First leg portion
153 Second leg portion
154 Fixing portion
154a Locking element

## Claims

1. A fixing device (130, 140, 150) of a mounting part (105) configured to be attached to a support frame (110), in particular for a windscreen wiper mounting assembly, the fixing device (130, 140, 150) comprising:
a grommet member (107a) having a receiving area (120) configured to receive a mounting head (108) of the mounting part (105); and
a connecting piece (130a, 140a, 150a) configured to secure the mounting part (105) to the support frame (110), the connecting piece (130a, 140a, 150a) comprising:
a holding portion (130b, 140b, 150b) extending at least partially along an outer surface of the grommet member (107a), the holding portion (130b, 140b, 150b) being configured to receive and rigidly hold the grommet member (107a) in position on the mounting head (108) of the mounting part (105), and
a fixing portion (134, 144, and 154) configured to cooperate with a secure element of the support frame (110) to engage the mounting part (105) and the support frame (110).

2. The fixing device (130, 140, 150) as claimed in claim 1, wherein the grommet member (107a) comprises a substantially an inverse C shape comprising an upper wing (115a), a lower wing (115b) joined together with a joining part (115c), delimiting an opened through hole (120a) of the receiving area (120).

3. The fixing device (130, 140, 150) as claimed in claim 1 or 2, wherein the holding portion (130b, 140b, 150b) comprises substantially a U shape with a base portion (131, 141, 151), a first leg portion (132, 142, 152) and a second leg portion (133, 143, 153), the first and second leg portions (132, 133, 142, 143, 152, 153) extending substantially perpendicular to the base portion (131, 141, 151), the second leg portion (133, 143, 153 having a smaller dimension than the first leg portion (132, 142, 152).

4. The fixing device (130, 140, 150) as claimed in the preceding claims 2 and 3, wherein:
the first leg portion (132, 142, 152) of the holding portion extends along an outer surface of the joining part (115c) of the grommet member (107a) or free ends of the upper wing (115a) and the lower wing (115b), and
the second leg portion (133, 143, 153) and the base portion (131, 141, and 151) of the holding portion extends along the lower wing (115b) of the grommet member (107a) or extends along the lower wing (115b) and a portion of the joining part (115c).

5. The fixing device (130, 140, 150) as claimed in the preceding claims 3 or 4, wherein the fixing portion (134, 144, 154) extends from the first leg portion (132, 142, 152) to secure the mounting part (105) to the support frame (110), and wherein the fixing portion (134, 144, 154) and the holding portion (130b, 140b, 150b) are integrally formed as a single piece.

6. The fixing device (130) as claimed in any one of claims 3 to 5, wherein the fixing portion (134) extends parallel to the base portion (131) and is configured to be received into a first through orifice (111a) of the support frame (110) to secure to the secure element for fixing the mounting part (105) to the support frame (110), the secure element being a portion of a base (110a) of the support frame (110).

7. The fixing device (140, 150) as claimed in any one of claims 3 to 5, wherein the fixing portion (144, 154) extends parallel to the base portion and configured to be introduced into a third through orifice (111c) of the support frame (110) to secure to the secure element for fixing the mounting part (105) to the support frame (110), the secure element being a flange (112) extending perpendicular to a base (110a ) of the support frame (110).

8. The fixing device (150) as claimed in claim 7, wherein the fixing portion (150a) comprises a locking hook (154a), which is being configured to abut against an end of the flange (112) so as to be secured to the flange (112).

9. The fixing device (140) as claimed in claim 7, wherein the fixing portion (140a) comprises a locking protrusion (144a), which is being configured to cooperate with the flange (112) so as to be secured to the flange (112).

10. The fixing device (130, 140, 150) as claimed in any one of the previous claims, wherein the grommet member (107a) is made of a first expandable material and the connecting piece (130a, 140a, 150a) is made of a second expandable material, wherein the second expandable material being less expandable than the first expandable material.

11. A windscreen wiper mounting assembly for a motor vehicle (100) comprising:
a mounting part (105);
a support frame (110) comprising a base (110a), at least one flange (110b) extending perpendicular to the base (110a), and at least one through orifice (111a, 11b, 111c);
a wiper motor; and
wherein the mounting part (105) comprise a base plate (105a) configured to receive and maintain the wiper motor and at least two locking arms (105b) extending from the base plate, wherein each locking arm comprises a mounting head (108), each of the mounting head (108) being configured to be introduced into a receiving area (120) of the grommet member (107a) of a fixing device (130, 140, 150) according to any one of preceding claims 1 to 10 to secure the mounting part (105) to the support frame (110).

12. The windscreen wiper mounting assembly according to the preceding claim, is a windscreen wiper mounting assembly for a rear windscreen (101b) of a motor vehicle (100).

13. A motor vehicle (100) comprising a windscreen wiper mounting assembly according to any of claims 11 or 12.

14. The motor vehicle (100) according to the preceding claim, wherein the mounting part (105) is a wiper motor cover and the support frame (110) is a metal sheet of a vehicle body.

15. A method for assembling a mounting part (105) of a wiper motor to a support frame (110), in particular for a windscreen wiper mounting assembly, the method comprising the steps of:
providing the mounting part (105) provided with a fixing device (130, 140, and 150) as claimed in any one preceding claims 1 to 10;
providing the support frame (110), wherein the support frame (110) comprises a base (110a), at least one flange (112) extending perpendicular to the base (110a), and at least one through orifice (111a, 111b, 111c);
moving the mounting part (105) closer to the support frame (110) for assembly of the mounting part (105) with the support frame (110);
introducing a fixing portion (134, 144, 154) of a connecting piece (130a, 140a, 150a) of the fixing device (130, 140, 150) into a through orifice from a lower side of the support frame (110) by rotating a connecting piece (130a, 140a, 150a) so that a upper wing (115a) of the grommet member (107a) abuts against the lower side; and
engaging the mounting part (105) and the support frame (110) by securing the fixing portion (134, 144, and 154) to a securing member of the support frame (110).
